# EUROPÄISCHE PATENTSCHRIFT

(11) **EP 3 910 538 B1**
(45) Veröffentlichungstag und Bekanntmachung des Hinweises auf die Patenterteilung: **08.10.2025**
(21) Anmeldenummer: 21172698.9
(22) Anmeldetag: 07.05.2021
(51) Int. Cl.: G06V 40/10, G06V 40/16, G06V 40/18, G06V 40/70

(54) **VERFAHREN UND VORRICHTUNG ZUM BIOMETRISCHEN IDENTIFIZIEREN EINER PERSON SOWIE ZUGANGSKONTROLLEINRICHTUNG**
METHOD AND DEVICE FOR BIOMETRIC IDENTIFICATION OF A PERSON AND ACCESS CONTROL DEVICE
PROCÉDÉ ET DISPOSITIF D'IDENTIFICATION BIOMÉTRIQUE D'UNE PERSONNE, AINSI QUE DISPOSITIF DE CONTRÔLE D'ACCÈS

(30) Priorität: 15.05.2020 DE 102020113318
(43) Veröffentlichungstag der Anmeldung: 17.11.2021
(73) Patentinhaber: Bundesdruckerei GmbH, 10969 Berlin (DE)
(72) Erfinder: WOLF, Andreas, 13158 Berlin (DE)
(74) Vertreter: Bittner, Thomas L.

(56) Entgegenhaltungen:
- US-A1- 2018 276 487
- US-A1- 2020 057 847
- ANTONIO IULA ET AL: "3D Ultrasound palm vein pattern for biometric recognition", ULTRASONICS SYMPOSIUM (IUS), 2012 IEEE INTERNATIONAL, IEEE, 7 October 2012 (2012-10-07), pages 1 - 4, XP032434502, ISSN: 1948-5719, ISBN: 978-1-4673-4561-3, DOI: 10.1109/ULTSYM.2012.0611
- BARBOSA IGOR BARROS ET AL: "Re-identification with RGB-D Sensors", 31 December 2012, ADVANCES IN INTELLIGENT DATA ANALYSIS XIX; [LECTURE NOTES IN COMPUTER SCIENCE; LECT.NOTES COMPUTER], PAGE(S) 433 - 442, ISBN: 978-3-540-35470-3, ISSN: 0302-9743, XP047531370
- GONZALEZ-SOSA ESTER ET AL: "Feature exploration for biometric recognition using millimetre wave body images", vol. 2015, no. 1, 1 December 2015 (2015-12-01), pages 1 - 13, XP055846674, Retrieved from the Internet <URL:https://jivp-eurasipjournals.springeropen.com/track/pdf/10.1186/s13640-015-0084-3.pdf> DOI: 10.1186/s13640-015-0084-3
- ANONYMOUS: "Biometrics - Wikipedia", 6 December 2019 (2019-12-06), XP055726913, Retrieved from the Internet <URL:https://en.wikipedia.org/w/index.php?title=Biometrics&oldid=929584405> [retrieved on 20200902]

## Beschreibung

Die Erfindung betrifft ein Verfahren und eine Vorrichtung zum biometrischen Identifizieren einer Person sowie eine Zugangskontrolleinrichtung.

### Hintergrund

Biometrische Identifizierungs- oder Authentifizierungssysteme werden genutzt, um Personen zu identifizieren, beispielsweise in Verbindung mit der Zutritts- oder Zugangskontrolle. Hierbei kann vorgesehen sein, biometrische Daten zu erfassen und auszuwerten, um die Person zu identifizieren. Als biometrische Daten werden beispielsweise Gesichtsdaten, Fingerabdruckdaten, Irisdaten oder Daten für den Verlauf einer Handvene erfasst und zur Personenidentifizierung ausgewertet. Bei häufig wechselnden Umgebungsbedingungen kommt es hierbei zu Leistungsschwankungen der Identifizierungssysteme, etwa bei unterschiedlichem Licht außerhalb von Gebäuden.

In dem Dokument US 2018 / 0 276 487 A1 sind ein Verfahren, ein System und ein computerlesbares Aufzeichnungsmedium zur Personenidentifikation über große Entfernungen bereitgestellt. Das Verfahren ist auf ein System mit einer Bilderfassungsvorrichtung und einem Tiefensensor anwendbar.

Das Dokument US 2020 / 0 057 847 A1 betrifft ein kontaktloses Erkennungsverfahren für mehrere Körperteile unter Verwendung mehrerer biometrischer Daten.

Der Artikel: IULA, A. et al. 3D Ultrasound palm vein pattern for biometric recognition. IEEE International Ultrasonics Symposium. Oktober 2012, Seiten 1 bis 4 offenbart eine Ultraschalltechnik zur Erstellung von 3D-Handvenenmustern für biometrische Erkennungszwecke.

In dem Artikel: BARBOSA, I.B. et al. Re-identification with RGB-D Sensors. Computer Vision - ECCV. 2012, Seiten 433 bis 442 werden für die Re-Identifizierung von Personen eine Reihe von weich-biometrischen 3D-Indikatoren vorgestellt, die unempfindlich gegenüber optischen Veränderungen sind und mit Hilfe der RGB-D-Technologie erfasst werden.

Der Artikel: GONZALEZ-SOSA, E. et al. Feature exploration for biometric recognition using millimetre wave body images. Journal on Image and Video Processing. 2015, Artikelnummer 30 schlägt ein biometrisches Erkennungssystem vor, das auf der Information der Silhouette des menschlichen Körpers basiert.

### Zusammenfassung

Aufgabe der Erfindung ist es, ein Verfahren und eine Vorrichtung zum biometrischen Identifizieren einer Person anzugeben, die bei unterschiedlichen Anwendungsbedingungen flexibel einsetzbar sind und mit denen die Sicherheit einer korrekten Personenidentifizierung erhöht ist. Auch soll eine verbesserte Zugangskontrolleinrichtung bereitgestellt werden.

Zur Lösung sind ein Verfahren sowie eine Vorrichtung zum biometrischen Identifizieren einer Person nach den unabhängigen Ansprüchen 1 und 10 geschaffen. Weiterhin ist eine Zugangskontrolleinrichtung nach dem nebengeordneten Anspruch 11 vorgesehen. Ausgestaltungen sind Gegenstand von abhängigen Unteransprüchen.

Nach einem Aspekt ist ein Verfahren zum biometrischen Identifizieren einer Person geschaffen, welches Folgendes vorsieht: Bereitstellen einer biometrischen Detektionseinrichtung; Erfassen von biometrischen Messdaten mittels der Detektionseinrichtung, die Irismessdaten für eine Iris einer zu identifizierenden Person sowie Gesichtsmessdaten für das Gesicht und Körpermessdaten für zumindest einen Körperabschnitt des Körpers der zu identifizierenden Person anzeigen, wobei die Körpermessdaten eingerichtet sind, ein digitales dreidimensionales Körpermodell für zumindest den Körperabschnitt der zu identifizierenden Person zu bestimmen; Bereitstellen einer Auswerteeinrichtung, die die biometrischen Messdaten empfängt; Bestimmen des digitalen dreidimensionalen Körpermodells für zumindest den Körperabschnitt mittels der Auswerteeinrichtung und Bestimmen von biometrischen Merkmalsdaten aus den biometrischen Messdaten mittels der Auswerteeinrichtung. Die biometrischen Merkmalsdaten umfassen: Irisdaten, die Irismerkmale für die zu identifizierende Person anzeigen; Gesichtsdaten, die Gesichtsmerkmale für die zu identifizierende Person anzeigen; und Körperdaten, die mittels des digitalen dreidimensionalen Körpermodells bestimmt werden und Körpermerkmale für zumindest den Körperabschnitt anzeigen, die von den Irismerkmalen und den Gesichtsmerkmalen verschieden sind. Weiterhin ist bei dem Verfahren vorgesehen, biometrischen Referenzdaten bereitzustellen, die der zu identifizierenden Person zugeordnet sind und Irisreferenzmerkmale, Gesichtsreferenzmerkmale und Körperreferenzmerkmale anzeigen, und die zu identifizierenden Person mittels Vergleich der biometrischen Merkmalsdaten mit den biometrischen Referenzdaten zu identifizieren.

Nah einem weiteren Aspekt ist eine Vorrichtung zum biometrischen Identifizieren einer Person geschaffen, die eine biometrischen Detektionseinrichtung aufweist, welche eingerichtet ist, biometrische Messdaten zu erfassen, die für eine zu identifizierenden Person Irismessdaten für eine Iris sowie Gesichtsmessdaten für das Gesicht und Körpermessdaten für zumindest einen Körperabschnitt des Körpers der zu identifizierenden Person anzeigen, wobei die Körpermessdaten geeignet sind, ein digitales dreidimensionales Modell für zumindest den Körperabschnitt der zu identifizierenden Person zu bestimmen. Die Vorrichtung weist eine Auswerteeinrichtung auf, die die biometrischen Messdaten empfängt und für Folgendes eingerichtet ist: das digitale dreidimensionale Körpermodell für zumindest den Körperabschnitt zu bestimmen, biometrische Merkmalsdaten aus den biometrischen Messdaten zu bestimmen und biometrischen Referenzdaten bereitzustellen, die der zu identifizierenden Person zugeordnet sind und Irisreferenzmerkmale, Gesichtsreferenzmerkmale und Körperreferenzmerkmale anzeigen, und die zu identifizierenden Person mittels Vergleich von biometrischen Merkmalsdaten mit den biometrischen Referenzdaten zu identifizieren. Die biometrischen Merkmalsdaten umfassen Folgendes: Irisdaten, die Irismerkmale für die zu identifizierende Person anzeigen; Gesichtsdaten, die Gesichtsmerkmale für die zu identifizierende Person anzeigen; und Körperdaten, die mittels des digitalen dreidimensionalen Körpermodells bestimmt werden und Körpermerkmale für zumindest den Körperabschnitt anzeigen, die von den Irismerkmalen und den Gesichtsmerkmalen verschieden sind.

Weiterhin ist eine Zugangskontrolleinrichtung mit einer Vorrichtung zum biometrischen Identifizieren einer Person vorgesehen, mit der der Zutritt oder Zugang an einer Eingangsstelle in Abhängigkeit vom Ergebnis der Personenidentifizierung gesteuert wird. Hierzu werden in der Zugangskontrolleinrichtung Identifizierungsdaten bereitgestellt, die das Ergebnis der Identifizierung der identifizierenden Person anzeigen. Wurde die Person identifiziert, kann Zugang oder Zutritt gewährt werden. Anderenfalls kann der Zutritt verweigert werden. Ergänzend kann bei der Zugangskontrolleinrichtung vorgesehen sein, dass geprüft wird, ob die identifizierte Person eine berechtigte Person ist, welcher der Zutritt oder der Zugang gewährt werden kann. Hierzu können in der Zugangskontrolleinrichtung Informationen bereitgestellt werden, die ein oder mehrere berechtigte Personen anzeigen. Wenn das Ergebnis der Personenidentifizierung positiv war, also die Person identifiziert wurde, kann für diese Person geprüft werden, ob sie eine der berechtigten Personen ist.

Die biometrischen Messdaten können ganz oder teilweise als digitale Bilddaten erfasst oder bereitgestellt werden.

Das dreidimensionale Modell für den Körper kann zum Beispiel als sogenanntes Textur-Modell bestimmt werden, wie dies in Verbindung mit digitalen 3D-Modellen an sich bekannt ist, beispielsweise im Bereich der Computergrafik.

Die biometrische Detektionseinrichtung kann eine Beleuchtungseinrichtung und eine Sensoreinrichtung aufweisen, wobei beim Erfassen der biometrischen Messdaten die zu identifizierende Person mittels der Beleuchtungseinrichtung mit Weißlicht und NIR-Licht (NIR - nahes Infrarot) beleuchtet wird und mittels der Sensoreinrichtung Weißlicht-Messdaten, die der Beleuchtung mit Weißlicht zugeordnet sind, und NIR-Licht-Messdaten erfasst werden, die der Beleuchtung mit NIR-Licht zugeordnet sind. Beispielsweise kann vorgesehen sein, für die Gesichtserkennung die Gesichtsmessdaten bei Beleuchtung mit dem Weißlicht zu erfassen. Beim Erfassen der Irismessdaten kann insbesondere NIR-Licht zum Einsatz kommen. Beim Erfassen der Körpermessdaten kann die Beleuchtung mit dem Weißlicht und / oder dem NIR-Licht vorgesehen sein. Die Beleuchtungseinrichtung kann als eine integrierte Beleuchtungseinrichtung ausgeführt sein, die sowohl eine oder mehrere Lichtquellen für das Weißlicht wie auch eine oder mehrere Lichtquellen für das NIR-Licht aufweist. Ergänzend kann eine Farblichtquelle für eine oder mehrere Farben (Licht mit engerem Spektralbereich) integriert sein. Alternativ können getrennte Beleuchtungsquellen für die unterschiedlichen Lichtarten vorgesehen sein.

In ähnlicher Weise kann vorgesehen sein, dass die Sensoreinrichtung als eine integrierte Sensoreinrichtung ausgeführt ist, die eingerichtet ist, sowohl die Weißlicht-Messdaten wie auch die NIR-Licht-Messdaten zu erfassen, insbesondere als digitale Bilddaten. Alternativ können getrennt gebildete Sensoreinrichtungen vorgesehen sein, von denen beispielsweise eine oder mehrere Sensoreinrichtungen eingerichtet sind, die Weißlicht-Messdaten zu erfassen, und ein oder mehrere andere Sensoreinrichtungen konfiguriert sind, die NIR-Licht-Messdaten zu erfassen.

Es kann vorgesehen sein, dass die Sensoreinrichtung eingerichtet ist, unterschiedliche biometrische Messdaten mit unterschiedlicher Bildauflösung zu erfassen. So kann vorgesehen sein, die Irismessdaten mit einer höheren Bildauflösung zu erfassen, als dies im Zusammenhang mit den Gesichts- und / oder den Körpermessdaten gemacht wird.

Wird die Personenidentifizierung in Verbindung mit einer Zugangs- oder Zutrittskontrolleinrichtung genutzt, können die Beleuchtungseinrichtung und die Sensoreinrichtung im Bereich eines Eingangs angeordnet sein, für den die Zutritts- oder Zugangskontrolle durchgeführt wird. Die verschiedenen Elemente der Detektionseinrichtung können hierbei zumindest teilweise in Eingangsrichtung auch hinter dem Eingang angeordnet sein. Beispielsweise kann die Beleuchtungseinrichtung hinter dem Eingang angeordnet sein, um die ankommende oder davor stehende Person für die biometrische Messdatenerfassung zu beleuchten. Auch eine oder mehrere Sensoreinrichtungen können in Eingangsrichtung vor oder hinter dem Eingang, für den die Zutrittskontrolle ausgeführt wird, angeordnet sein. Hierbei sind Beleuchtungseinrichtung und Sensoreinrichtung in räumlicher Nähe zu dem Eingang selbst angeordnet.

Für die Anordnung von Lichtquellen der Beleuchtungseinrichtung können unterschiedliche Ausgestaltungen vorgesehen sein. So können beispielsweise seitlich eines Durchgangs- oder Eingangsbereichs, den die zu identifizierende Person durchschreitet, Beleuchtungsanordnungen (Beleuchtungs-Array) angeordnet sein. In die Beleuchtungsanordnung können ein oder mehrere Sensoreinrichtungen integriert sein, beispielsweise Bildaufnahmeeinrichtungen, insbesondere Kameras. Alternativ oder ergänzend können Beleuchtungseinrichtung und / oder Sensoreinrichtung zum Erfassen der biometrischen Messdaten zumindest teilweise um die identifizierende Person herum verschwenkt oder verlagert werden, um die biometrischen Messdaten hierbei zu erfassen, wenn die zu identifizierende Person in einem der Detektionseinrichtung zugeordneten Messbereich oder -raum steht. Es kann eine Ausgestaltung vergleichbar einem Vollkörper-Scanner vorgesehen sein.

Die Weißlicht-Messdaten können mittels einer ersten Sensoreinrichtung und die NIR-Licht-Messdaten mittels einer zweiten Sensoreinrichtung erfasst werden. Alternativ zur getrennten Ausbildung mit der ersten und der zweiten Sensoreinrichtung kann eine integrierte Sensoreinrichtung vorgesehen sein, um sowohl die Weißlicht-Messdaten wie auch die NIR-Licht-Messdaten zu erfassen, beispielsweise eine integrierte Bildaufnahmeeinrichtung.

Beim Erfassen der biometrischen Messdaten kann die zu identifizierende Person mittels der Beleuchtungseinrichtung mit strukturiertem Licht beleuchtet werden. Das strukturierte Licht kann beispielsweise mit voneinander beabstandeten Lichtstreifen gebildet sein, die mittels der Beleuchtungseinrichtung auf der Körperoberfläche der zu identifizierenden Person erzeugt werden, wobei die Lichtstreifen zum Beispiel eine im Wesentlichen parallele Anordnung und / oder sich kreuzend ausgeführt sein können. Hierbei können auf der zu identifizierenden Person Lichtmuster erzeugt, beispielsweise Lichtgitter oder Streifenanordnungen.

Beim Erfassen der biometrischen Messdaten kann die zu identifizierende Person mittels der Beleuchtungseinrichtung mit Terahertz-Strahlung bestrahlt werden, um beim Erfassen der biometrischen Messdaten einen Terahertz-Scan auszuführen. Hierbei kann vorgesehen sein, einen Ganzkörperscan oder einen Scan eines Teils des Körpers auszuführen. Beleuchtungseinrichtung und Sensoreinrichtung sind eingerichtet, den Terahertz-Scan auszuführen. Die Beleuchtungseinrichtung kann als eine integrierte Beleuchtungseinrichtung ausgeführt sein, die ein oder mehrere Strahlungsquellen für die Terahertz-Strahlung aufweist. Terahertz-Strahlen gehören zum Spektrum elektromagnetischer Strahlung und liegen im Frequenzbereich zwischen der Infrarotstrahlung und den Mikrowellen. Kleidung ist für die Terahertz-Detektoren unsichtbar. Denn ihre Strahlung durchdringt Materialien wie Textilien, Plastik, Papier oder dergleichen nahezu problemlos und wird dabei kaum absorbiert.

Beim Bestimmen der Gesichtsdaten kann unter Verwendung der Gesichtsmessdaten ein digitales dreidimensionales Gesichtsmodell für die zu identifizierenden Person bestimmt werden, und die Gesichtsdaten können zumindest teilweise aus dem digitalen dreidimensionalen Gesichtsmodell bestimmt werden. Das dreidimensionale Gesichtsmodell kann zum Beispiel vergleichbar dem digitalen dreidimensionalen Modell für den Körper(abschnitt) aus den zugeordneten Messdaten, also den Gesichtsdaten bestimmt werden. Verfahren zum Erzeugen oder zum Bestimmen eines digitalen dreidimensionalen Modells sind als solche in verschiedener Ausführungsformen bekannt. Beispielsweise wird die Technik des Textur-Modells angewendet. Hierbei kann insbesondere vorgesehen sein, jedem erfassten (Bild-) Messpunkt oder in Triangulationsmodellen jeder erfassten Messfläche des dreidimensionalen Modells eine lokale (Punkt mit gewisser Umgebung) farbige Erscheinung in Draufsicht zuzuordnen.

In der Auswerteeinrichtung können Abstandsdaten bereitgestellt werden, die eine Entfernung zwischen der zu identifizierenden Person und der Sensoreinrichtung beim Erfassen der biometrischen Messdaten anzeigen. Beim Bestimmen der Körpermerkmale können unter Verwendung der Abstandsdaten mittels eines Längenmaßes charakterisierte Körpermerkmale bestimmt werden. Mit Hilfe der Abstandsdaten kann das digitale dreidimensionale Körpermodell den tatsächlichen Abmessungen des Körperabschnitts entsprechend erzeugt werden, so dass hieraus dann Körpermerkmale bestimmt werden können, die insbesondere durch ein Längenmaß charakterisiert sind. Hierzu gehörten zum Beispiel Arm- oder Beinlänge, Handgröße oder Länge bestimmter von außen sichtbarer Knochen.

Beim Bestimmen der Körpermerkmale können ein oder mehrere Körpermerkmale aus der folgenden Gruppe bestimmt werden: Body-Masss-Index, Hauttatoos, Hautmerkmale und Gangeigenschaften. Betreffend Hautveränderungen können beispielsweise Leberflecken oder andere spezifische Pigmentierungen, Narben, Hautfalten oder lokale Behaarungseigenschaften als Körpermerkmale bestimmt werden. Auch Augen- und / oder Hautfarbe können als Körpermerkmale herangezogen werden. Alternativ oder ergänzend kann vorgesehen sein, im Rahmen der Bestimmung der Körpermerkmale Eigenschaften eines Gangs der zu identifizierenden Person aus dem digitalen dreidimensionalen Körpermodell zu bestimmen, wahlweise auch unter Verwendung eines bewegten digitalen dreidimensionalen Körpermodells.

Die biometrischen Messdaten können Körpermessdaten für zumindest einen Körperabschnitt aus der folgenden Gruppe enthaltend erfasst werden: Körpervorderseite, Körperrückseite, Arme, Beine, Hände, Unterkörper und Oberkörper. Das digitale dreidimensionale Körpermodell kann sich dann auf den detektierten Körperabschnitt beschränken. Alternativ kann ein erweitertes Körpermodel mit weiteren Körperabschnitten und sogar ein Ganzkörpermodell bestimmt werden. Hierbei kann vorgesehen sein, nicht anhand der Körpermessdaten erfasste oder ausreichend datentechnisch aus den Messdaten auswertbare Körperabschnitte der zu identifizierenden Person durch Abschnitte eines standardisierten digitalen dreidimensionalen Körpermodells zu ersetzen.

Weiter ist Folgendes vorgesehen: Bereitstellen von ersten biometrischen Referenzdaten, die der zu identifizierenden Person zugeordnet sind und erste Körperreferenzmerkmale anzeigen; Bereitstellen von zweiten biometrischen Referenzdaten, die der zu identifizierenden Person zugeordnet sind und zweite Körperreferenzmerkmale anzeigen, die von den ersten verschieden sind; Zuordnen der ersten biometrischen Referenzdaten zu einer ersten Auswertebedingung; Zuordnen der zweiten biometrischen Referenzdaten zu einer zweiten Auswertebedingung, die von der ersten Auswertebedingung verschieden ist; Bereitstellen von Auswertedaten in der Auswerteeinrichtung, die die erste oder die zweite Auswertebedingungen anzeigen; und Identifizieren der zu identifizierenden Person mittels Vergleich der biometrischen Merkmalsdaten mit den ersten biometrischen Referenzdaten, wenn die Auswertedaten die erste Auswertebedingung anzeigen, und mit den zweiten biometrischen Referenzdaten, wenn die Auswertedaten die zweite Auswertebedingung anzeigen. Bei dieser Ausführungsform sind für die zu identifizierende Person unterschiedliche biometrische Referenzdaten bereitgestellt, nämlich erste und zweite biometrische Referenzdaten, die sich unterscheiden. Den verschiedenen biometrischen Referenzdaten ist jeweils eine unterschiedliche Auswertebedingung zugeordnet. Dieses ermöglicht es, in Abhängigkeit von einer konkret gegebenen Auswertebedingung oder -situation bestimmte ausgewählte biometrische Referenzdaten für den Vergleich zum Identifizieren der Person heranzuziehen. So kann vorgesehen sein, biometrische Referenzdaten für die zu identifizierende Person zu bestimmen, wenn diese Winter- oder Sommerbekleidung trägt. Regelmäßig wird die Bedeckung der Körperoberfläche im Fall der Winterbekleidung größer sein. Auch ist die Dicke der Kleidung üblicherweise im Winter größer. Als Auswertebedingung kann dann die Jahreszeit unterschiedlichen biometrischen Referenzdaten zugeordnet werden. Liegt in der Auswerteeinrichtung Information über die Jahreszeit vor, kann dann der entsprechende Satz von biometrischen Referenzdaten zum Vergleich herangezogen werden, der der aktuellen Jahreszeit zugeordnet ist. In einem anderen Beispiel können unterschiedliche Referenzdaten verschiedenen Tageszeiten zugeordnet sein, für üblicherweise unterschiedliche Umgebungslichtverhältnisse (zum Beispiel Tag und Abend) gegeben sind. Hierzu kann in der Auswerteeinrichtung vorgesehen sein, dass vor dem Identifizieren mittels Vergleich geprüft wird, ob und ggf. welche Auswertebedingung aktuell vorliegt, um dann in Abhängigkeit von dieser Prüfung einen biometrischen Referenzdatensatz auszuwählen, der der gefundenen Auswertebedingung zugordnet ist.

Es werden Identifizierungsdaten erzeugt, die ein Ergebnis der Identifizierung der zu identifizierenden Person anzeigen, und an eine Zugangskontrolleinrichtung übermittelt werden, worauf Zugangskontrolleinrichtung dem Ergebnis der Identifizierung entsprechend gesteuert wird. Bei dieser Ausgestaltung wird die Information über das Ergebnis der Personenidentifizierung der Zugangskontrolleinrichtung übermittelt, so dass diese in Abhängigkeit hiervon den Zutritt oder Zugang für einen Eingang regeln kann, beispielsweise das Öffnen einer Tür oder Pforte. Die Identifizierungsdaten können hierbei anzeigen, welche Arten von biometrischen Messdaten für die Personenidentifizierung tatsächlich herangezogen wurden, also Irisdaten, Gesichtsdaten und Körperdaten, oder nur eine Auswahl hiervon. Die Zugangskontrolleinrichtung kann eingerichtet sein, einen Zugang oder Zutritt zu verweigern, wenn bei der Personenidentifizierung keine Körperdaten herangezogen wurden, beispielsweise weil die erfassten Körpermessdaten keine ausreichende Qualität für einen Vergleich mit den Körperreferenzmerkmalen zuließen. Auch kann der Zugang, trotz identifizierter Person, verweigert werden, wenn nicht wenigstens zwei der verschiedenen biometrischen Messdaten zur Personenidentifizierung tatsächlich genutzt wurden, also beispielsweise Irisdaten und Körperdaten oder Gesichtsdaten einerseits und Körperdaten andererseits.

Die vorangehend im Zusammenhang mit dem Verfahren zum biometrischen Identifizieren einer Person erläuterten Ausgestaltungen können im Zusammenhang mit der Vorrichtung zum biometrischen Identifizieren einer Person sowie der Zugangskontrolleinrichtung entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung eines Eingangsbereiches mit einem Wandabschnitt und einem Wanddurchgang sowie einer zugeordneten Detektionseinrichtung;
- Fig. 2: eine schematische Darstellung eines weiteren Eingangsbereiches mit einer zugeordneten Detektionseinrichtung;
- Fig. 3: eine schematische Blockdarstellung einer Zugangskontrolleinrichtung und
- Fig. 4: eine schematische Blockdarstellung zu einem Verfahren zum biometrischen Identifizieren einer Person.

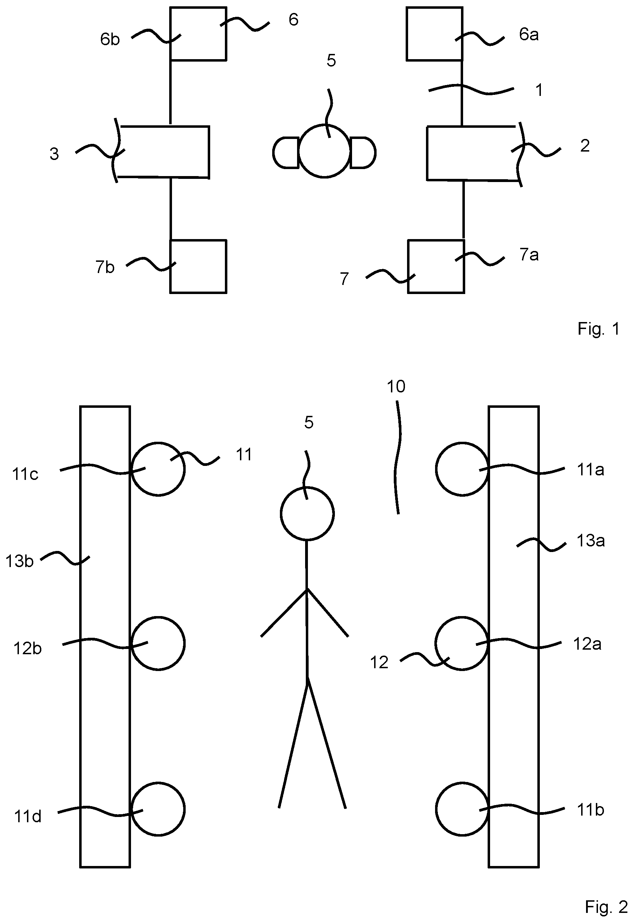

Fig. 1 zeigt eine schematische Darstellung eines Eingangsbereiches 1 in Draufsicht, bei dem zwischen gegenüberliegenden Wandabschnitten 2, 3 ein Durchgang (Eingang) 4 für eine zu identifizierende Person 5 gebildet ist. Auf einer Seite der beiden Wandabschnitte 2, 3 ist eine Beleuchtungseinrichtung 6 mit einer ersten und zweiten Lichtquelle 6a, 6b angeordnet. Auf der gegenüberliegenden Seite der beiden Wandabschnitte 2, 3 ist eine Sensoreinrichtung 7 mit einer ersten und einer zweiten Bildaufnahmeeinrichtung 7a, 7b vorgesehen. Mit Hilfe der Beleuchtungseinrichtung 6 kann die zu identifizierende Person 5, die in den Eingangsbereich 1 eintritt, beleuchtet werden, insbesondere mit Weißlicht und / oder NIR-Licht, um dann mit Hilfe der Sensoreinrichtung 7 biometrische Messdaten für die Person zu erfassen, nämlich Irisdaten für eine Iris der Person 5, Gesichtsdaten für das Gesicht der Person 5 sowie Körperdaten für zumindest einen Körperabschnitt der Person 5. Die erfassten biometrischen Messdaten können dann zur Personenidentifizierung ausgewertet werden, was unten weiter erläutert wird.

Fig. 2 zeigt eine schematische Darstellung eines anderen Eingangsbereiches 10 von vorn, in dem seitlich auf gegenüberliegenden Seiten Lichtquellen 11a, ..., 11d einer Beleuchtungseinrichtung 11 angeordnet sind, um die zu identifizierende Person 5, die in den Eingangsbereich 10 gelangt, mit einer oder mehreren Lichtarten zu beleuchten. Eine Sensoreinrichtung 12 ist auf beiden Seiten mit Kameraeinrichtungen 12a, 12b gebildet, um biometrische Messdaten für die zu identifizierende Person 5 zu erfassen. Die Beleuchtungseinrichtung 11 und die Sensoreinrichtung 12 sind im gezeigten Ausführungsbeispiel in gegenüberliegenden Säulenanordnungen 13a, 13b gebildet.

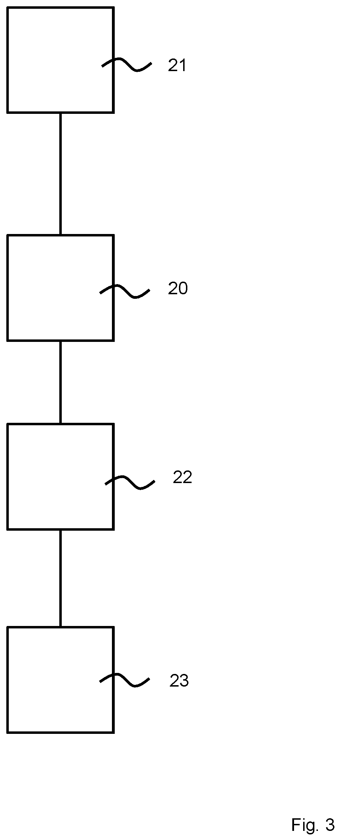

Fig. 3 zeigt eine schematische Darstellung einer Zugangskontrolleinrichtung 20, die einen Zutritts- oder Zugangsvorrichtung 21 steuert, beispielsweise eine Tür oder eine Pforte. Die Zugangskontrolleinrichtung 20 ist mit einer Auswerteeinrichtung 22 verbunden, die ihrerseits mit einer Detektionseinrichtung 23 verbunden ist. Die Detektionseinrichtung 23 weist eine Beleuchtungseinrichtung sowie eine Sensoreinrichtung zum Erfassen biometrischer Messdaten für die zu identifizierende Person 5 auf, insbesondere ein oder mehrere Bildaufnahmeeinrichtungen, wie dieses unter Bezugnahme auf die Fig. 1 und 2 oben beispielhaft erläutert wurde.

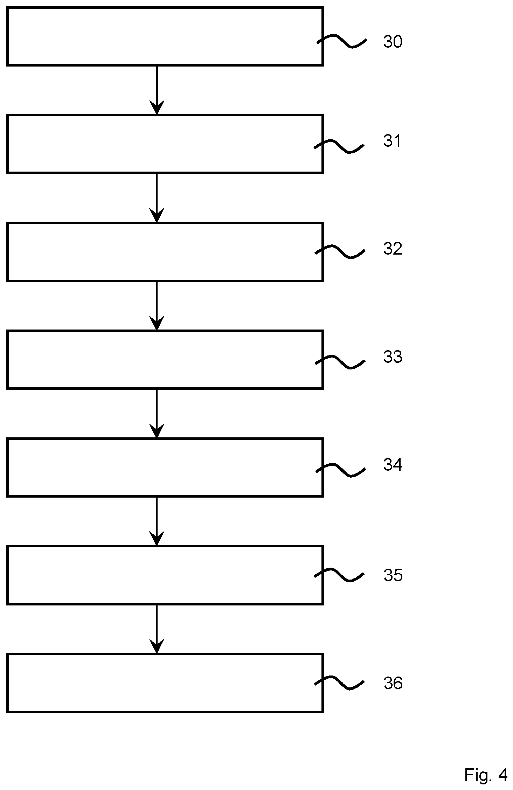

Unter Bezugnahme auf Fig. 4 wird im Folgenden ein Verfahren zum biometrischen Identifizieren der zu identifizierende Person 5 erläutert. Gemäß Schritt 30 werden mittels der Detektionseinrichtung 23 biometrische Messdaten für die zu identifizierende Person 5 erfasst. Die biometrischen Messdaten umfassen folgende verschiedene biometrischen Daten: Irisdaten für eine Iris der zu identifizierende Person 5; Gesichtsdaten für das Gesicht der zu identifizierende Person 5 sowie Körpermessdaten für wenigstens einen Körperabschnitt der zu identifizierende Person 5. Die Körpermessdaten sind geeignet, unter deren Verwendung ein digitales dreidimensionales Körpermodell für zumindest den Körperabschnitt zu erzeugen. Hierzu kann vorgesehen sein, dass die Körpermessdaten mittels mehrerer Bildaufnahmeeinrichtungen erfasst werden, die beim Erfassen der biometrischen Messdaten um die zu identifizierende Person 5 räumlich verteilt sind. Alternativ oder ergänzend kann vorgesehen sein, dass mit Hilfe der Beleuchtungseinrichtung Lichtstrukturen auf der zu identifizierende Person 5 erzeugt werden, um geeignete Körpermessdaten zu erfassen.

Im Schritte 31 wird aus den Körpermessdaten das digitale dreidimensionale Körpermodell für den zumindest einen Körperabschnitt oder den ganzen Körper der zu identifizierende Person 5 bestimmt. Techniken, die geeignet sind, aus solchen Körpermessdaten ein digitales dreidimensionales Körpermodell zu erzeugen, sind als solche in verschiedenen Ausführungsformen bekannt. Sind einzelne Bereiche des Körpers der zu identifizierende Person 5 nicht mittels der Körpermessdaten erfasst, können diese beim Erstellen des digitalen dreidimensionalen Körpermodells durch standardisierte Körperoberflächen oder -abschnitte ersetzt werden. Für fehlende Bereiche, für die keine Messdaten vorliegen, könnten in einer Visualisierung eine graue Oberfläche ohne spezifische Textur eingefügt werden, so dass diese Bereiche "maskiert" werden.

Im Schritt 32 werden aus dem digitalen dreidimensionalen Körpermodell Körpermerkmale für die zu identifizierende Person 5 bestimmt. Hierzu können Körpermerkmale gehören, die durch ein Längenmaß charakterisiert sind, beispielsweise Beinlänge, Armlänge oder Handgröße. Eine solche dimensionale Bestimmung von Körpermerkmalen ist ermöglicht, wenn das digitale dreidimensionale Körpermodell den tatsächlichen Körpermaßen der zu identifizierende Person 5 entsprechend bestimmt wurde. Hierzu werden Abstandsinformationen herangezogen, die den Abstand zum Erfassen der biometrischen Messdaten genutzten Bildaufnahmeeinrichtungen 7a, 7b, 12a, 12b zu der zu identifizierende Person 5 angeben. Es können alternativ oder ergänzend auch Körpermerkmale herangezogen werden, die nicht durch ein Längenmaß bestimmt sind, beispielsweise können ein sogenannter Body-Maß-Index, Augenfarbe und / oder Hautfarbe für die zu identifizierende Person bestimmt werden.

Im Schritt 33 werden Irismerkmale für die zu identifizierende Person 5 aus den biometrischen Messdaten bestimmt. Weiterhin ist vorgesehen, Gesichtsmerkmale im Schritt 34 aus den biometrischen Messdaten zu bestimmen.

Sodann werden biometrische Referenzdaten bereitgestellt, die der zu identifizierende Person 5 zugeordnet sind und Irisreferenzmerkmale, Gesichtsreferenzmerkmale sowie Körperreferenzmerkmale anzeigen. Zum Identifizieren der Person 5 werden im Schritt 36 die biometrischen Referenzdaten mit den biometrischen Merkmalsdaten verglichen. Hierbei kann vorgesehen sein, in jedem Fall die Körperdaten und wenigstens die Irisdaten oder zumindest die Gesichtsdaten für die Personenidentifizierung tatsächlich heranzuziehen, wenn zum Beispiel die Irisdaten oder die Gesichtsdaten keine ausreichende Qualität für den Vergleich mit den biometrischen Referenzdaten aufweisen. Das Auswerten aller drei Arten von biometrischen Daten, nämlich Irisdaten, Gesichtsdaten sowie Körperdaten, verbessert die Zuverlässigkeit des Identifizierungsprozesses für die Person.

Optional kann vorgesehen sein, die Information über die erfolgreiche Personenidentifizierung an die Zugangskontrolleinrichtung 20 zu übermitteln, die dann den Zugang oder Zutritt in Abhängigkeit von der Personenidentifizierung steuern kann.

Im Zusammenhang mit den Körpermessdaten kann vorgesehen sein, dass die beispielsweise nur für eine Vorderseite oder eine Rückseite des Körpers der zu identifizierende Person 5 erfasst werden. Auch das Erfassen von Körpermessdaten für nur den Oberkörper von vorn und hinten kann vorgesehen sein.

Bei Zutrittskontrollen kann vorausgesetzt werden, dass Personen irgendwo eintreten wollen. Sie werden also regelmäßig durch eine Tür oder einen ähnliches bauliches Element gehen. Damit verhalten sie sich regelmäßig so, dass sie in Gangrichtung schauen und sich in absehbarer Folge an vorhersehbaren dicht beeinander liegenden Orten befinden. Das wird ausgenutzt. Folgende Daten sollen erfasst werden: Gesichtsdaten, Irisdaten (Iriden) und Körpergestalt. Vorzugsweise umfasst die Körpergestalt den ganzen Körper.

Im Bereich der realen oder virtuellen Tür werden zunächst einmal geeignete Licht- oder Beleuchtungsquellen quellen verbaut (vgl. Fig. 1 und 2 und Erläuterungen oben), die zum Beispiel das gesamte sichtbare Spektrum (Weißlicht) und den Nah-Infrarotbereich (NIR) und die Durchgangsstelle der Person 5 durch die Tür und einen gewissen Bereich davor und dahinter (zum Beispiel etwa 50 cm) (räumlich) abdecken.

Von der in diesem Bereich befindlichen Person 5 sollen mit (in den meisten Fällen mehreren) Kameras Daten von Augen (mit hoher Auflösung, NIR und Weißlicht), Gesicht und Körperoberfläche (mit guter Auflösung, NIR und Weißlicht) erfasst werden. Hierbei ist vorgesehen, dass ein digitales dreidimensionales Modell erstellt werden kann, etwa durch Beaufschlagung mit strukturiertem Licht oder durch die Verwendung von mindestens zwei Kameras. Es ist zweckmäßig, für den Bereich, der eine besonders hohe Auflösung erfordert (Augenregion) eine andere (höher auflösende) Kamera zu verwenden, als für den Rest des Körpers. Es ist ebenfalls zweckmäßig, für Weißlicht und NIR verscheidene Kameras zu verwenden, bei geeigneten Objektiven und Wechselfiltern sind auch Lösungen für NIR und Weißlicht mit einer Kamera möglich.

Mit den erfassten Daten wird ein digitales 3D-Modell des Körpers erzeugt, ähnlich, wie es zum Beispiel von Vertex-Darstellungen des Gesichtes bei 3D-Gesichtserkennung als solches bekannt ist. Regionen, von denen keine Daten vorliegen, können weggelassen werden. Dieses 3D-Modell wird mit entsprechender Farbinformation angereichert, wobei Farbe hier sowohl die Weißlicht- als auch die NIR-Reaktion umfassen kann. Auf diese Weise wird der für Vergleiche verwendete Datensatz gebildet. Sowohl für die Gesichts- als auch die Irisinformation können übliche Verfahren eingesetzt werden, um konventionelle zweidimensionale Datensätze dieser Charakteristika zu erzeugen. Wenn die Position des Körpers zu den Kameras bekannt ist, ist eine Vermessung sämtlicher sichtbaren Entfernungen möglich. Diese Messwerte tragen zu einem sogenannten Feature-Satz der zu vergleichenden biometrischen Daten bei. Die aus der Gesichtsinformation mit gängigen Methoden abgeleiteten Daten wie etwa der Body-Mass-Index können auf Konsistenz mit der Erscheinung des Gesamtkörpers geprüft werden.

Zu Zeiten, in denen die zu identifizierende Person 5 dickere Kleidung trägt, können die erfassten Körperdaten von denen in Zeiten mit leichterer Bekleidung abweichen. Das wird im Vergleichsmodell berücksichtigt.

Das digitale dreidemensionale Körpermodell kann gemessene Längen für einzelne Körperteile maßstäbilch verwenden. In Fällen, in denen große Teile der Körperoberfläche sichtbar sind, etwa beim Zugang zum Schwimmbad o.ä., kann alternativ ein normiertes Körpermodell verwendet werden, bei dem alle Körperoberflächen auf einen Normkörper skaliert werden. Wird so verfahren, verliert man Informationen zur Körpergestalt, kann aber leicht Informationen zur Oberfläche und ihrer Struktur zwischen verschiedenen Personen vergleichen, zum Beispiel Hautfalten, Sommersprossen oder Leberflecken.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum biometrischen Identifizieren einer Person (5), mit:
- Bereitstellen einer biometrischen Detektionseinrichtung (23);
- Erfassen von biometrischen Messdaten mittels der Detektionseinrichtung (23), die Irismessdaten für eine Iris einer zu identifizierenden Person (5) sowie Gesichtsmessdaten für das Gesicht und Körpermessdaten für zumindest einen Körperabschnitt des Körpers der zu identifizierenden Person (5) anzeigen, wobei die Körpermessdaten geeignet sind, ein digitales dreidimensionales Körpermodell für zumindest den Körperabschnitt der zu identifizierenden Person zu bestimmen;
- Bereitstellen einer Auswerteeinrichtung (22), die die biometrischen Messdaten empfängt;
- Bestimmen des digitalen dreidimensionalen Körpermodells für zumindest den Körperabschnitt mittels der Auswerteeinrichtung (22);
- Bestimmen von biometrischen Merkmalsdaten aus den biometrischen Messdaten mittels der Auswerteeinrichtung (22), die Folgendes umfassen:
- Irisdaten, die Irismerkmale für die zu identifizierende Person (5) anzeigen;
- Gesichtsdaten, die Gesichtsmerkmale für die zu identifizierende Person (5) anzeigen; und
- Körperdaten, die mittels des digitalen dreidimensionalen Körpermodells bestimmt werden und Körpermerkmale für zumindest den Körperabschnitt anzeigen, die von den Irismerkmalen und den Gesichtsmerkmalen verschieden sind;
- Bereitstellen von biometrischen Referenzdaten, die der zu identifizierenden Person (5) zugeordnet sind und Irisreferenzmerkmale, Gesichtsreferenzmerkmale und Körperreferenzmerkmale anzeigen, wobei der Person (5) zugeordnete erste biometrische Referenzdaten bereitgestellt werden, die erste Körperreferenzmerkmale anzeigen, und der Person (5) zugeordnete zweite biometrische Referenzdaten bereitgestellt werden, die zweite Körperreferenzmerkmale anzeigen, die von den ersten verschieden sind;
- Zuordnen der ersten biometrischen Referenzdaten zu einer ersten Auswertebedingung und Zuordnen der zweiten biometrischen Referenzdaten zu einer zweiten Auswertebedingung, die von der ersten Auswertebedingung verschieden ist;
- Bereitstellen von Auswertedaten in der Auswerteeinrichtung, die die erste oder die zweite Auswertebedingungen anzeigen; und
- Identifizieren der zu identifizierenden Person (5) mittels Vergleich der biometrischen Merkmalsdaten mit den biometrischen Referenzdaten, wobei die biometrischen Merkmalsdaten mit den ersten biometrischen Referenzdaten verglichen werden, wenn die Auswertedaten die erste Auswertebedingung anzeigen, und mit den zweiten biometrischen Referenzdaten verglichen werden, wenn die Auswertedaten die zweite Auswertebedingung anzeigen,
wobei Identifizierungsdaten, die ein Ergebnis der Identifizierung der zu identifizierenden Person (5) anzeigen, erzeugt und an eine Zugangskontrolleinrichtung (20) übermittelt werden, worauf die Zugangskontrolleinrichtung (20) dem Ergebnis der Identifizierung entsprechend gesteuert wird.

2. Verfahren nach Anspruch 1, **dadurch gekennzeichnet, dass** die biometrische Detektionseinrichtung (23) eine Beleuchtungseinrichtung (6; 11) und eine Sensoreinrichtung (7; 12) aufweist, wobei beim Erfassen der biometrischen Messdaten die zu identifizierende Person (5) mittels der Beleuchtungseinrichtung (6; 11) mit Weißlicht und NIR-Licht beleuchtet wird und mittels der Sensoreinrichtung (7; 12) Weißlicht-Messdaten, die der Beleuchtung mit Weißlicht zugeordnet sind, und NIR-Licht-Messdaten erfasst werden, die der Beleuchtung mit NIR-Licht zugeordnet sind.

3. Verfahren nach Anspruch 2, **dadurch gekennzeichnet, dass** die Weißlicht-Messdaten mittels einer ersten Sensoreinrichtung und die NIR-Licht-Messdaten mittels einer zweiten Sensoreinrichtung erfasst werden.

4. Verfahren nach mindestens einem der vorangehenden Ansprüche, dadurch g e - **kennzeichnet**, dass beim Erfassen der biometrischen Messdaten die zu identifizierende Person (5) mittels der Beleuchtungseinrichtung (6; 11) mit strukturiertem Licht beleuchtet wird.

5. Verfahren nach mindestens einem der vorangehenden Ansprüche, **dadurch gekennzeichnet, dass** beim Erfassen der biometrischen Messdaten die zu identifizierende Person (5) mittels der Beleuchtungseinrichtung (6; 11) mit Terahertz-Strahlung bestrahlt wird, um beim Erfassen der biometrischen Messdaten einen Terahertz-Scan auszuführen.

6. Verfahren nach mindestens einem der vorangehenden Ansprüche, **dadurch gekennzeichnet, dass** beim Bestimmen der Gesichtsdaten ein digitales dreidimensionales Gesichtsmodell für die zu identifizierenden Person (5) unter Verwendung der Gesichtsmessdaten bestimmt wird und die Gesichtsdaten zumindest teilweise aus dem digitalen dreidimensionalen Gesichtsmodell bestimmt werden.

7. Verfahren nach mindestens einem der vorangehenden Ansprüche, **dadurch gekennzeichnet, dass**
- in der Auswerteeinrichtung (22) Abstandsdaten bereitgestellt werden, die eine Entfernung zwischen der zu identifizierenden Person (5) und der Sensoreinrichtung (7; 12) beim Erfassen der biometrischen Messdaten anzeigen; und
- beim Bestimmen der Körpermerkmale unter Verwendung der Abstandsdaten mittels eines Längenmaßes charakterisierte Körpermerkmale bestimmt werden.

8. Verfahren nach mindestens einem der vorangehenden Ansprüche, **dadurch gekennzeichnet, dass** beim Bestimmen der Körpermerkmale ein oder mehrere Körpermerkmale aus der folgenden Gruppe bestimmt werden: Body-Mass-Index, Hauttatoos, Hautveränderungen und Gangeigenschaften.

9. Verfahren nach mindestens einem der vorangehenden Ansprüche, dadurch **ge**- **kennzeichnet**, dass biometrischen Messdaten Körpermessdaten für zumindest einen Körperabschnitt aus der folgenden Gruppe enthaltend erfasst werden: Körpervorderseite, Körperrückseite, Arme, Beine, Hände, Unterkörper und Oberkörper.

10. Vorrichtung zum biometrischen Identifizieren einer Person (5), mit:
- einer biometrischen Detektionseinrichtung, die eingerichtet ist, biometrische Messdaten zu erfassen, die für eine zu identifizierenden Person (5) Irismessdaten für eine Iris sowie Gesichtsmessdaten für das Gesicht und Körpermessdaten für zumindest einen Körperabschnitt des Körpers der zu identifizierenden Person (5) anzeigen, wobei die Körpermessdaten eingerichtet sind, ein digitales dreidimensionales Modell für zumindest den Körperabschnitt der zu identifizierenden Person (5) zu bestimmen;
- einer Auswerteeinrichtung, die die biometrischen Messdaten empfängt und eingerichtet ist,
- das digitale dreidimensionale Körpermodell für zumindest den Körperabschnitt zu bestimmen;
- biometrische Merkmalsdaten aus den biometrischen Messdaten zu bestimmen, die Folgendes umfassen:
- Irisdaten, die Irismerkmale für die zu identifizierende Person (5) anzeigen;
- Gesichtsdaten, die Gesichtsmerkmale für die zu identifizierende Person (5) anzeigen; und
- Körperdaten, die mittels des digitalen dreidimensionalen Körpermodells bestimmt werden und Körpermerkmale für zumindest den Körperabschnitt anzeigen, die von den Irismerkmalen und den Gesichtsmerkmalen verschieden sind;
- biometrischen Referenzdaten bereitzustellen, die der zu identifizierenden Person (5) zugeordnet sind und Irisreferenzmerkmale, Gesichtsreferenzmerkmale und Körperreferenzmerkmale anzeigen, wobei der Person (5) zugeordnete erste biometrische Referenzdaten bereitgestellt werden, die erste Körperreferenzmerkmale anzeigen, und der Person (5) zugeordnete zweite biometrische Referenzdaten bereitgestellt werden, die zweite Körperreferenzmerkmale anzeigen, die von den ersten verschieden sind;
- die ersten biometrischen Referenzdaten zu einer ersten Auswertebedingung und die zweiten biometrischen Referenzdaten zu einer zweiten Auswertebedingung, die von der ersten Auswertebedingung verschieden ist, zuzuordnen;
- Auswertedaten in der Auswerteeinrichtung bereitzustellen, die die erste oder die zweite Auswertebedingungen anzeigen; und
- die zu identifizierenden Person (5) mittels Vergleich der biometrischen Merkmalsdaten mit den biometrischen Referenzdaten zu identifizieren, wobei die biometrischen Merkmalsdaten mit den ersten biometrischen Referenzdaten verglichen werden, wenn die Auswertedaten die erste Auswertebedingung anzeigen, und mit den zweiten biometrischen Referenzdaten verglichen werden, wenn die Auswertedaten die zweite Auswertebedingung anzeigen,
- Identifizierungsdaten, die ein Ergebnis der Identifizierung der zu identifizierenden Person (5) anzeigen, zu erzeugen und an eine Zugangskontrolleinrichtung (20) zu übermitteln, worauf die Zugangskontrolleinrichtung (20) dem Ergebnis der Identifizierung entsprechend steuerbar ist.

11. Zugangskontrolleinrichtung (20), mit einer Vorrichtung zum biometrischen Identifizieren einer Person (5) nach Anspruch 10.

## Claims

1. A method for biometrically identifying a person (5), comprising:
- providing a biometric detection device (23);
- acquiring biometric measurement data by means of the detection device (23), which indicate iris measurement data for an iris of a person (5) to be identified as well as face measurement data for the face and body measurement data for at least one body section of the body of the person (5) to be identified, wherein the body measurement data are suitable for determining a digital three-dimensional body model for at least the body section of the person to be identified;
- providing an evaluation device (22), which receives the biometric measurement data;
- determining the digital three-dimensional body model for at least the body section by means of the evaluation device (22);
- determining biometric feature data from the biometric measurement data by means of the evaluation device (22), which comprise:
- iris data indicating iris features for the person (5) to be identified;
- face data indicating face features for the person (5) to be identified; and
- body data which are determined by means of the digital three-dimensional body model and indicate body features for at least the body section which are different from the iris features and the face features;
- providing biometric reference data which are associated with the person (5) to be identified and indicate iris reference features, face reference features and body reference features, wherein first biometric reference data associated with the person (5) are provided, which indicate first body reference features, and second biometric reference data associated with the person (5) are provided, which indicate second body reference features which are different from the first body reference features;
- associating the first biometric reference data with a first evaluation condition and associating the second biometric reference data with a second evaluation condition which is different from the first evaluation condition;
- providing evaluation data in the evaluation device, which indicate the first or the second evaluation condition; and
- identifying the person (5) to be identified by means of comparing the biometric feature data with the biometric reference data, wherein the biometric feature data are compared with the first biometric reference data if the evaluation data indicate the first evaluation condition, and are compared with the second biometric reference data if the evaluation data indicate the second evaluation condition,
wherein identification data indicating a result of the identification of the person (5) to be identified are generated and transmitted to an access control device (20), whereupon the access control device (20) is controlled according to the result of the identification.

2. The method according to claim 1, **characterized in that** the biometric detection device (23) comprises an illumination device (6; 11) and a sensor device (7; 12), wherein, during the acquisition of the biometric measurement data, the person (5) to be identified is illuminated with white light and NIR light by means of the illumination device (6; 11) and white light measurement data associated with the illumination with white light and NIR light measurement data associated with the illumination with NIR light are acquired by means of the sensor device (7; 12).

3. The method according to claim 2, **characterized in that** the white light measurement data are acquired by means of a first sensor device and the NIR light measurement data are acquired by means of a second sensor device.

4. The method according to at least one of the preceding claims, **characterized in that**, during the acquisition of the biometric measurement data, the person (5) to be identified is illuminated with structured light by means of the illumination device (6; 11).

5. The method according to at least one of the preceding claims, **characterized in that**, during the acquisition of the biometric measurement data, the person (5) to be identified is irradiated with terahertz radiation by means of the illumination device (6; 11) in order to carry out a terahertz scan during the acquisition of the biometric measurement data.

6. The method according to at least one of the preceding claims, **characterized in that**, during the determination of the face data, a digital three-dimensional face model for the person (5) to be identified is determined using the face measurement data and the face data are determined at least partially from the digital three-dimensional face model.

7. The method according to at least one of the preceding claims, **characterized in that**
- distance data are provided in the evaluation device (22), which indicate a distance between the person (5) to be identified and the sensor device (7; 12) during the acquisition of the biometric measurement data; and
- body features **characterized by** means of a length measure are determined during the determination of the body features using the distance data.

8. The method according to at least one of the preceding claims, **characterized in that**, during the determination of the body features, one or more body features from the following group are determined: body mass index, skin tattoos, skin changes and gait properties.

9. The method according to at least one of the preceding claims, **characterized in that** biometric measurement data including body measurement data for at least one body section from the following group are acquired: front side of the body, back side of the body, arms, legs, hands, lower body and upper body.

10. An apparatus for biometrically identifying a person (5), comprising:
- a biometric detection device which is configured to acquire biometric measurement data which indicate, for a person (5) to be identified, iris measurement data for an iris as well as face measurement data for the face and body measurement data for at least one body section of the body of the person (5) to be identified, wherein the body measurement data are configured to determine a digital three-dimensional model for at least the body section of the person (5) to be identified;
- an evaluation device, which receives the biometric measurement data and is configured to
- determine the digital three-dimensional body model for at least the body section;
- determine biometric feature data from the biometric measurement data, which comprise:
- iris data indicating iris features for the person (5) to be identified;
- face data indicating face features for the person (5) to be identified; and
- body data which are determined by means of the digital three-dimensional body model and indicate body features for at least the body section which are different from the iris features and the face features;
- provide biometric reference data which are associated with the person (5) to be identified and indicate iris reference features, face reference features and body reference features, wherein first biometric reference data associated with the person (5) are provided, which indicate first body reference features, and second biometric reference data associated with the person (5) are provided, which indicate second body reference features which are different from the first body reference features;
- associate the first biometric reference data with a first evaluation condition and the second biometric reference data with a second evaluation condition which is different from the first evaluation condition;
- provide evaluation data in the evaluation device, which indicate the first or the second evaluation condition; and
- identify the person (5) to be identified by means of comparing the biometric feature data with the biometric reference data, wherein the biometric feature data are compared with the first biometric reference data if the evaluation data indicate the first evaluation condition, and are compared with the second biometric reference data if the evaluation data indicate the second evaluation condition,
- generate and transmit identification data indicating a result of the identification of the person (5) to be identified to an access control device (20), whereupon the access control device (20) is controllable according to the result of the identification.

11. An access control device (20), comprising an apparatus for biometrically identifying a person (5) according to claim 10.

## Revendications

1. Procédé d'identification biométrique d'une personne (5), comprenant :
- la fourniture d'un dispositif de détection biométrique (23) ;
- l'acquisition de données de mesure biométrique au moyen du dispositif de détection (23), qui indiquent des données de mesure d'un iris d'une personne (5) à identifier, ainsi que des données de mesure faciales pour le visage et des données de mesure corporelles pour au moins une partie du corps de la personne (5) à identifier, dans lequel les données de mesure corporelles sont adaptées à la détermination d'un modèle corporel tridimensionnel numérique pour au moins la partie du corps de la personne à identifier ;
- la fourniture d'un dispositif d'évaluation (22) qui reçoit les données de mesure biométrique ;
- la détermination du modèle corporel tridimensionnel numérique pour au moins la partie du corps au moyen du dispositif d'évaluation (22) ;
- la détermination de données de caractéristiques biométriques à partir des données de mesure biométriques au moyen du dispositif d'évaluation (22), qui comprennent ce qui suit :
- des données d'iris, qui indiquent les caractéristiques d'iris de la personne (5) à identifier ;
- des données faciales, qui indiquent les caractéristiques faciales de la personne (5) à identifier ; et
- des données corporelles, qui sont déterminées au moyen du modèle corporel tridimensionnel numérique et indiquent les caractéristiques corporelles d'au moins la partie du corps, qui sont différentes des caractéristiques d'iris et des caractéristiques faciales ;
- la fourniture de données de référence biométriques, qui sont associées à la personne (5) à identifier et indiquent les caractéristiques de référence d'iris, les caractéristiques de référence faciales et les caractéristiques de référence corporelles, dans lequel des premières données de référence biométriques associées à la personne (5) sont fournies, qui indiquent des premières caractéristiques corporelles et des deuxièmes données de référence biométriques associées à la personne (5) sont fournies, qui indiquent des deuxièmes caractéristiques corporelles, qui sont différentes des premières ;
- l'affectation des premières données de référence biométriques à une première condition d'évaluation et l'affectation des deuxièmes données de référence biométriques à une deuxième condition d'évaluation, qui est différente de la première condition d'évaluation ;
- la fourniture de données d'évaluation dans le dispositif d'évaluation, qui indiquent la première ou la deuxième condition d'évaluation ; et
- l'identification de la personne à identifier (5) en comparant les données biométriques aux données de référence biométriques, dans lequel les données biométriques sont comparées aux premières données de référence biométriques, si les données d'évaluation correspondent à la première condition d'évaluation et aux deuxièmes données de référence biométriques, si les données d'évaluation correspondent à la deuxième condition d'évaluation,
dans lequel les données d'identification, qui indiquent un résultat de l'identification de la personne à identifier (5) sont générées et transmises à un dispositif de contrôle d'accès (20), lequel dispositif de contrôle d'accès (20) est ensuite commandé en fonction du résultat de l'identification.

2. Procédé selon la revendication 1, **caractérisé en ce que** le dispositif de détection biométrique (23) comprend un dispositif d'éclairage (6 ; 11) et un capteur (7 ; 12), dans lequel lors de l'acquisition des données de mesure biométriques, la personne à identifier (5) est éclairée par le dispositif d'éclairage (6 ; 11) avec de la lumière blanche et de la lumière proche infrarouge et le capteur (7 ; 12) acquiert des données de mesure de lumière blanche associées à l'éclairage blanc et des données de mesure de lumière proche infrarouge, qui sont associées à la lumière proche infrarouge.

3. Procédé selon la revendication 2, **caractérisé en ce que** les données de mesure de lumière blanche sont acquises par un premier capteur et les données de mesure de lumière proche infrarouge par un deuxième capteur.

4. Procédé selon au moins une des revendications précédentes, **caractérisé en ce que**, lors de l'acquisition des données de mesure biométriques, la personne à identifier (5) est éclairée par une lumière structurée au moyen du dispositif d'éclairage (6 ; 11).

5. Procédé selon au moins une des revendications précédentes, **caractérisé en ce que**, lors de l'acquisition des données de mesure biométriques, la personne à identifier (5) est irradiée par un rayonnement térahertz au moyen du dispositif d'éclairage (6 ; 11) afin d'effectuer un balayage térahertz lors de l'acquisition des données de mesure biométriques.

6. Procédé selon au moins une des revendications précédentes, **caractérisé en ce que**, lors de la détermination des données faciales, un modèle facial tridimensionnel numérique de la personne à identifier (5) est déterminé à l'aide des données de mesure faciales et les données faciales sont au moins partiellement dérivées du modèle numérique facial tridimensionnel.

7. Procédé selon au moins une des revendications précédentes, **caractérisé en ce que**
- des données de distance indiquant la distance entre la personne à identifier (5) et le capteur (7 ; 12) sont fournies au dispositif d'évaluation (22) lors de l'acquisition des données de mesure biométriques ; et
- lors de la détermination des caractéristiques corporelles, des caractéristiques corporelles **caractérisées par** une mesure de longueur sont déterminées à partir des données de distance.

8. Procédé selon au moins une des revendications précédentes, **caractérisé en ce que**, lors de la détermination des caractéristiques corporelles, une ou plusieurs caractéristiques corporelles du groupe suivant sont déterminées : indice de masse corporelle, tatouages cutanés, modifications cutanées et caractéristiques de la démarche.

9. Procédé selon au moins une des revendications précédentes, **caractérisé en ce que** des données de mesure biométriques sont collectées, y compris des données de mesure corporelles pour au moins une partie du corps du groupe suivant : avant, arrière, bras, jambes, mains, bas et haut du corps.

10. Dispositif d'identification biométrique d'une personne (5), comprenant :
- un dispositif de détection biométrique configuré pour acquérir des données de mesure biométrique indiquant, pour une personne (5) à identifier, des données de mesure d'iris d'un iris, ainsi que des données de mesure faciales pour le visage et des données de mesure corporelles pour au moins une partie du corps de la personne (5) à identifier, dans lequel les données de mesure corporelles sont adaptées à la détermination d'un modèle corporel tridimensionnel numérique pour au moins la partie du corps de la personne (5) à identifier ;
- un dispositif d'évaluation, qui reçoit les données de mesure biométrique et est configuré pour
- déterminer le modèle corporel numérique tridimensionnel pour au moins la partie du corps ;
- déterminer des données de caractéristiques biométriques à partir des données de mesure biométrique, comprenant les éléments suivants :
- des données d'iris, qui indiquent les caractéristiques d'iris de la personne (5) à identifier ;
- des données faciales, qui indiquent les caractéristiques faciales de la personne (5) à identifier ; et
- des données corporelles, qui sont déterminées au moyen du modèle corporel tridimensionnel numérique et indiquent les caractéristiques corporelles d'au moins la partie du corps, qui sont différentes des caractéristiques d'iris et des caractéristiques faciales ;
- fournir des données de référence biométriques, qui sont associées à la personne (5) à identifier et indiquent les caractéristiques de référence d'iris, les caractéristiques de référence faciales et les caractéristiques de référence corporelles, dans lequel des premières données de référence biométriques associées à la personne (5) sont fournies, qui indiquent des premières caractéristiques corporelles et des deuxièmes données de référence biométriques associées à la personne (5) sont fournies, qui indiquent des deuxièmes caractéristiques corporelles, qui sont différentes des premières ;
- affecter des premières données de référence biométriques à une première condition d'évaluation et affecter des deuxièmes données de référence biométriques à une deuxième condition d'évaluation, qui est différente de la première condition d'évaluation ;
- fournir des données d'évaluation dans le dispositif d'évaluation, qui indiquent la première ou la deuxième condition d'évaluation ; et
- identifier la personne à identifier (5) en comparant les données biométriques aux données de référence biométriques, dans lequel les données biométriques sont comparées aux premières données de référence biométriques, si les données d'évaluation correspondent à la première condition d'évaluation et aux deuxièmes données de référence biométriques, si les données d'évaluation correspondent à la deuxième condition d'évaluation,
- générer des données d'identification, qui indiquent un résultat de l'identification de la personne à identifier (5) et les transmettre à un dispositif de contrôle d'accès (20), lequel dispositif de contrôle d'accès (20) est ensuite commandé en fonction du résultat de l'identification.

11. Dispositif de contrôle d'accès (20) comprenant un dispositif d'identification biométrique d'une personne (5) selon la revendication 10.
